# EUROPEAN PATENT SPECIFICATION

(11) **EP 0 654 965 B1**
(45) Date of publication and mention of the grant of the patent: **09.04.1997**
(21) Application number: 92917720.2
(22) Date of filing: 17.08.1992
(51) Int. Cl.: A01K 41/06, A01K 41/00

(54) **METHOD AND APPARATUS FOR INCUBATING AND HATCHING EGGS**
VERFAHREN UND VORRICHTUNG ZUM BRÜTEN UND SCHLÜPFEN VON EIERN
PROCEDE ET APPAREIL POUR INCUBER ET COUVER DES OEUFS

(43) Date of publication of application: 31.05.1995
(60) Divisional application: 96115535.5
(73) Proprietor: THE MARMON CORPORATION OF CANADA LIMITED, Cambridge, Ontario N3H 4S4 (CA)
(72) Inventor: CANNON, Robert, W., Salem, OR 97301 (US)
(74) Representative: Belcher, Simon James
(86) International application number: CA9200354
(87) International publication number: WO9404024

(56) References cited:
- EP-A- 0 128 387
- EP-A- 0 375 030
- WO-A-88/03362
- GB-A- 1 184 299
- US-A- 3 396 703
- US-A- 3 783 832

## Description

### BACKGROUND OF THE INVENTION

### 1. Field of the Invention

The present invention relates to methods and apparatus for incubating and hatching eggs and more particularly to such methods and apparatus in which trays holding a plurality of eggs are received in a controlled environment for promoting incubation and hatching.

### 2. Description of the Related Art

Trays for receiving eggs during the incubation process have been in use for many years. Generally speaking, a tray is loaded with freshly-laid eggs and is thereafter received in a rack or the like along with a number of other loaded egg trays. The rack is positioned in a chamber in which the environment, especially temperature and humidity, is controlled to maximize the number of chicks hatched from the eggs. Most, but not all, incubation and hatching methods involve incubating in a first tray which is designed to optimize incubation conditions. Just prior to hatching, the eggs are transferred to a second hatching tray which is designed to accommodate the hatched chicks. Prior art methods include placing the egg on a substantially planar surface in an egg tray.

During incubation, the trays are tilted about a horizontal axis to simulate the same egg movement caused by a hen, through the use of her beak and feet, in a nest. Such movement is important during the incubation process because the chick embryo floats for the first 14 days of incubation and will stick to the upper surface of the egg and die if the egg is not rotated. On or about the 14th day incubation, the chick orients itself with its head in the end of the egg which is tilted upwardly, which should be the large end containing the air cell.

During hatching, which occurs on or about the 21st day of incubation, the chick uses its beak to peck through the egg shell along a circle near the air-cell end of the egg and substantially coaxial with the longitudinal axis of the egg. The end of the egg is thus removed and the chick can emerge from the egg.

If the small end of the egg is tilted up when the chick positions itself the chick may malposition with its head in the small end of the egg. When the chick first pips the shell and begins to breathe, it will drown. Even with the chick's head positioned in the air-cell end, if any part of the egg through which the chick must peck is against another object, such as the floor of the egg tray or an adjacent egg, the chick may not be able to peck through the shell and thus dies.

Sometimes the egg tray tilting which must be undertaken during incubation causes the eggs to roll against one another or the egg tray in a manner which may prevent chick hatching as described above. The small end of one egg may ride up onto an adjacent egg or a portion of the tray thereby tilting the longitudinal axis of the egg so that the air-cell end is against the floor of the tray. If the small egg end is higher than the air-cell end, the problems described above may develop.

GB-1184299 discloses an incubating tray having an openwork structure made up of a plurality of rectangular openings each partially closed by a plurality of resilient fingers, the tips of which are tapered upwardly. An egg is supported on the fingers and within a number of vertical spiles. Eggs must be transferred from the disclosed openwork structure to a hatching tray for hatching.

### SUMMARY OF THE INVENTION

In one aspect, the present invention comprises a tray for incubating and hatching eggs which includes a plurality of curved surfaces formed on the tray bottom for holding an egg so that the longitudinal axis of the egg forms an acute angle relative to the tray bottom with the air-cell end of the egg being further from the tray bottom than the other end.

It is a general object of the present invention to provide a method and apparatus for incubating and hatching eggs which overcomes the above-enumerated disadvantages associated with prior art methods and apparatus.

It is another object of the present invention to provide an improved tray in which eggs can be both incubated and hatched.

It is a more specific object of the present invention to provide such a tray which improves the yield and quality of hatched chicks.

The foregoing and other objects, features and advantages of the invention will become more readily apparent from the following detailed description of a preferred embodiment which proceeds with reference to the drawings.

### BRIEF DESCRIPTION OF THE DRAWINGS

Fig. 1 is a top plan view of a tray for incubating and hatching eggs constructed in accordance with the present invention.

Fig. 2 is an enlarged sectional view taken along line 2-2 in Fig. 1.

Fig. 3 is an enlarged, partial plan view of the egg tray of Fig. 1 stacked on and nested within another such egg tray.

Fig. 4 is a view taken along line 4-4 in Fig. 3.

Fig. 5 is a partial, bottom plan view of the upper egg tray in Fig. 3.

### DETAILED DESCRIPTION OF THE PREFERRED EMBODIMENT

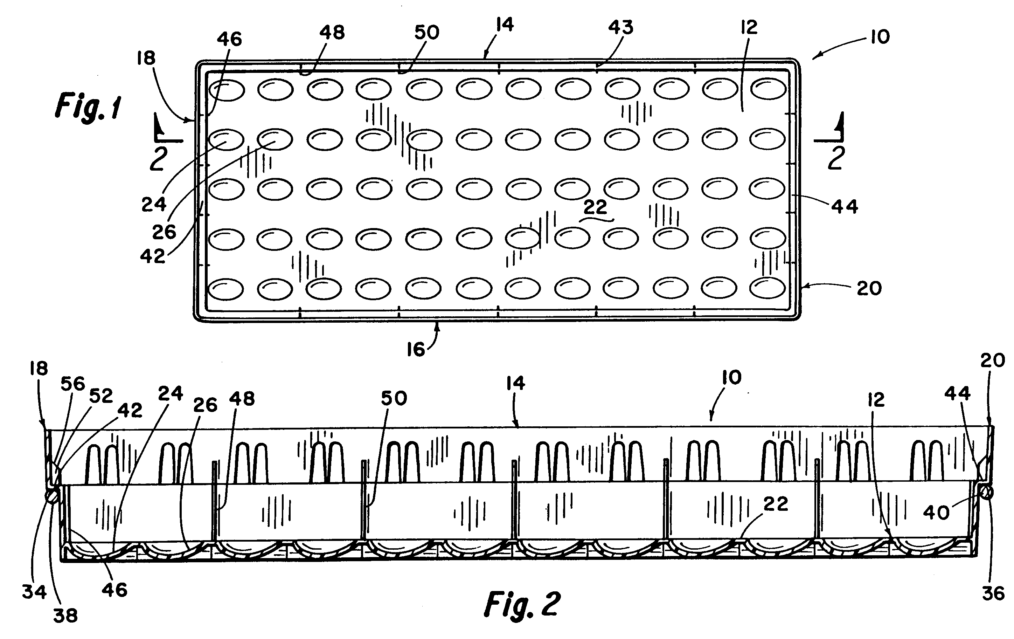

Turning now to the drawing and considering Figs. 1 and 2, indicated generally at 10 is a tray for incubating and hatching eggs. Tray 10 is constructed in accordance with the present invention. The tray includes a bottom 12 and side walls 14, 16, 18, 20.

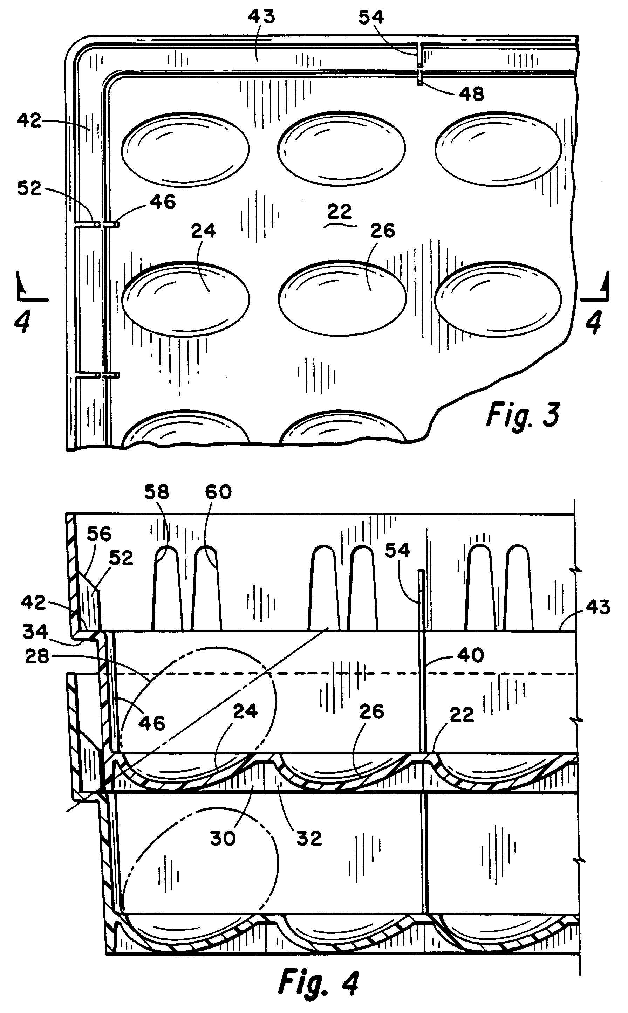

Bottom 12 includes what is referred to herein as a horizontal egg support surface 22. The egg support surface is bounded by side walls 14-20 and includes five rows and 12 columns of egg-holding recesses, like recesses 24, 26. The egg supporting recesses are also referred herein as holding means or curved surfaces. As can perhaps be best viewed in Fig. 4, surfaces 24, 26 are each asymmetrical in shape and are formed so as to hold an egg, like egg 28 (shown in dot-dash lines), with its narrow end tilted downwardly relative to surface 22 and its big or air-cell end tilted upwardly as illustrated in Fig. 3.

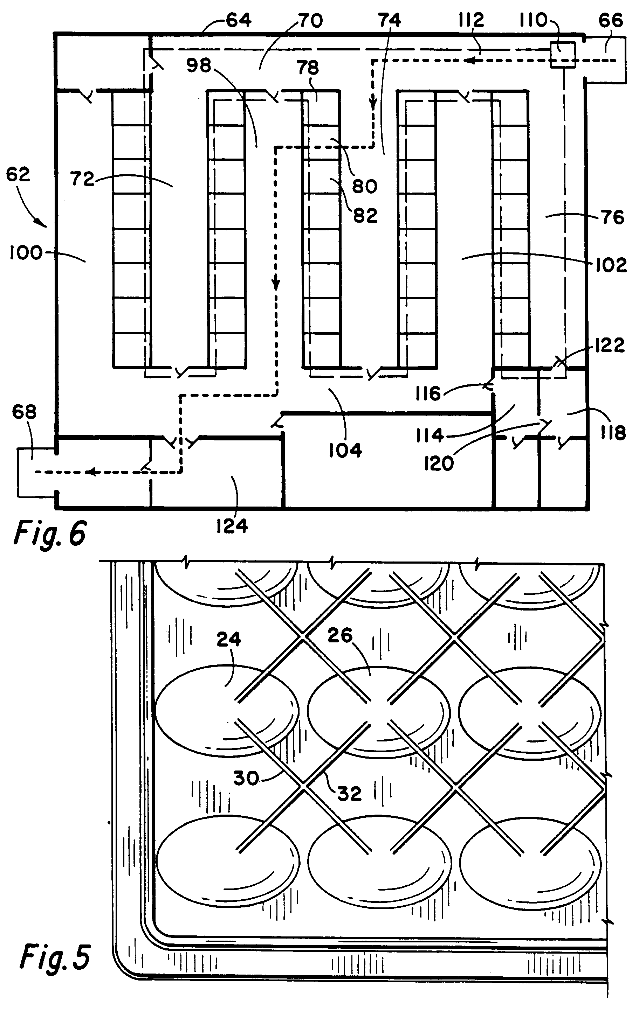

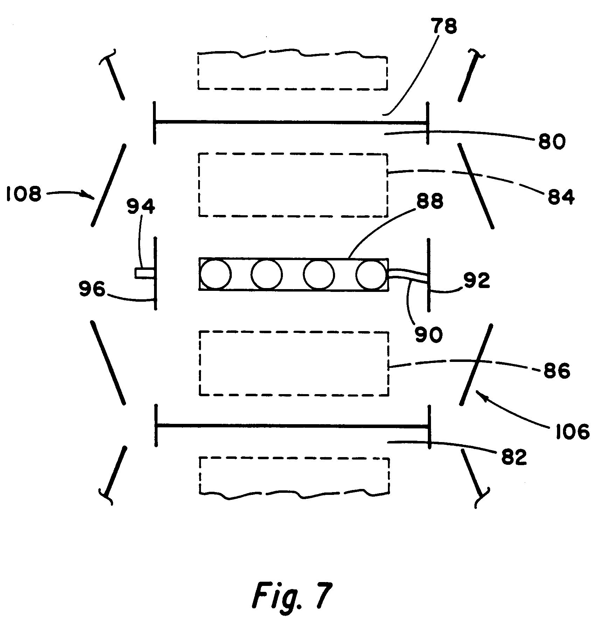

As can be seen in Figs. 2, 4 and 5, the underside of bottom 12 includes reinforcing webs, like webs 30, 32. The underside of each web is substantially co-planar with the underside of all the other webs on bottom 12. Such structure provides a flat lower surface for supporting tray 10 when the same is set on a flat surface.

Each of the side walls include a downwardly-directed exterior shoulder, like shoulders 34, 36 on walls 18, 20, respectively. As can be seen in Fig. 2, the shoulders are constructed to cooperate with rods 38, 40 on a conventional rack (not shown) for supporting a plurality of egg trays like tray 10.

Each of the side walls further includes an upwardly-directed interior shoulder, like shoulders 42, 43, 44 on side walls 18, 14, 20, respectively. Vertical support webs, like webs 46, 48, 50, extend from surface 22 at the lower end of each web to the plane of the upwardly-directed shoulders, like shoulders 42, 43 at the upper end of each web. The upper end of each of the webs, like webs 46, 48, thus comprises a portion of its associated upwardly-directed shoulder, like shoulders 42, 43, respectively.

Associated with each support web is a guiding means or guide web, like guide webs 52, 54 are associated with support webs 46, 48, respectively. Each of the guide webs includes an upper surface, like upper surface 56 on web 52, which extends between an upper web position adjacent the side wall upon which the guide web is formed to a lower interior position. As will later become more fully apparent, when the bottom of one tray like tray 10 is lowered into the top of another tray, also like tray 10, the guide webs serve to centre the upper tray relative to the lower tray so that the lower surface of the upper tray side walls is guided to the upper surface of the support webs on the lower tray. This configuration is illustrated in Fig. 4.

A plurality of air vents, like vents 58, 60 are disposed in each side wall and extend upwardly from shoulder 43 as shown. Each side wall includes a pair of such vents aligned with the recesses, like recesses 24, 26, in each of the rows and columns. It can thus be seen that air is free to circulate directly above eggs received in the recesses in a first direction between walls 14, 16 and at right angles thereto, between walls 18, 20.

## Claims

1. A method of incubating and hatching eggs comprising the steps of:
(a) placing a plurality of eggs on a horizontal egg support tray (10) having a support surface (22) which has a plurality of curved egg supporting recesses (24, 26) formed therein;
(b) positioning each egg so that the longitudinal axis of the egg forms an acute angle relative to the egg support tray with the air-cell end of the egg being higher than the other end;
(c) immobilizing each egg relative to the egg support surface in one of said curved recesses; and
(d) incubating the eggs until they hatch.

2. A method as claimed in claim 1, in which the step of positioning each egg comprises the step of positioning each egg so that the longitudinal axis of the egg forms an angle of at least 20 degrees relative to the egg support surface.

3. A method as claimed in claim 2, in which the step of positioning each egg comprises the step of positioning each egg so that the longitudinal axis of the egg forms an angle of approximately 35 degrees relative to the egg support surface.

4. A method as claimed in claim 1, in which said method further includes the step of preventing the eggs from touching one another.

5. A method as claimed in claim 1, in which said method further includes the step of tilting the egg support surface during the step of incubating the eggs.

6. Apparatus for incubating and hatching eggs, comprising means for supporting a plurality of eggs on a substantially planar egg support tray (10), characterised in that the tray has a substantially planar egg support surface (22) with a plurality of curved egg supporting recesses (24, 26) formed therein for holding each egg so that the longitudinal axis of the egg forms an acute angle relative to the egg support surface (22) with the air-cell end of the egg being further from the egg support surface than the other end of the egg.

7. Apparatus as claimed in claim 6, in which the egg supporting recesses (24, 26) comprise means for holding each egg so that the longitudinal axis of the egg forms an angle of at least 20 degrees relative to the egg support surface (22).

8. Apparatus as claimed in claim 7, in which the curved egg supporting recesses (24, 26) comprise means for holding each egg so that the longitudinal axis of the egg forms an angle of approximately 35 degrees relative to the egg support surface.

9. Apparatus as claimed in claim 6, in which said apparatus further includes means for preventing the eggs from touching one another.

10. Apparatus as claimed in claim 6, in which said apparatus further includes means for tilting the egg support surface.

11. A tray for holding eggs during incubation and hatching, characterised by:
(a) a bottom (12) having a substantially planar surface (22) for supporting eggs; and
(b) a plurality of curved egg supporting recesses (24, 26) formed in the bottom each of which is constructed for holding an egg so that the longitudinal axis of the egg forms an acute angle relative to the bottom surface (22) with the air-cell end of the egg being further from the bottom surface than the other end.

12. A tray as claimed in claim 11, in which said tray includes a side wall having an upwardly-directed interior shoulder for supporting the bottom of another such tray in a nesting fashion.

13. A tray as claimed in claim 12, in which said side wall includes air vents above said shoulder for permitting a flow of air directly over eggs held by said curved surfaces.

14. A tray as claimed in claim 12, in which said shoulder is constructed and arranged to space the upper surface of an egg received in a first tray from the lower surface of the bottom of a second tray stacked on and nested within said first tray.

15. A tray as claimed in claim 14, in which said egg tray further includes means for guiding a first such egg tray into stacked and nested relation with a second such tray when said first tray is lowered onto said second tray.

16. A tray as claimed in claim 11, in which said tray includes a side wall having a downwardly-directed exterior shoulder for engaging a support in a tray rack.

## Patentansprüche

1. Verfahren zum Brüten und Schlüpfen von Eiern mit den folgenden Schritten:
(a) Eine Mehrzahl von Eiern wird auf einem horizontalen Eitragtablett (10) plaziert, welches eine Tragfläche (22) aufweist, in welcher einer Mehrzahl gekrümmter Eitragerücksprünge (24, 26) eingeformt ist;
(b) jedes Ei wird derart positioniert, daß seine Längsachse einen spitzen Winkel gegenüber dem Eitragetablett bildet, wobei das Luftzellenende des Eies höher als das andere Ende ist;
(c) jedes Ei wird gegenüber der Eitragefläche in einem der genannten gekrümmten Rücksprünge immobilisiert; und
(d) die Eier werden bebrütet bis sie ausschlüpfen.

2. Verfahren nach Anspruch 1, bei welchem der Schritt der Positionierung von jedem Ei den Schritt umfaßt, daß jedes Ei derart positioniert wird, daß die Längsachse des Eies einen Winkel von mindestens 20^{o} gegenüber der Eitragefläche bildet.

3. Verfahren nach Anspruch 2, bei welchem der Schritt der Positionierung von jedem Ei den Schritt umfaßt, daß jedes Ei derart positioniert wird, daß die Längsachse des Eies einen Winkel von ungefähr 35^{o} gegenüber der Eitragefläche bildet.

4. Verfahren nach Anspruch 1, welches zusätzlich den Schritt enthält, daß die Eier daran gehindert werden, einander zu berühren.

5. Verfahren nach Anspruch 1, welches zusätzlich den Schritt enthält, daß die Eitragefläche während des Schritts der Bebrütung der Eier verkippt wird.

6. Vorrichtung zum Brüten und Schlüpfen von Eiern mit einer Einrichtung, welche eine Mehrzahl von Eiern auf einem im wesentlichen planaren Eitragtablett (10) trägt, dadurch gekennzeichnet, daß das Tablett eine im wesentlichen Planare Eitragefläche (22) umfaßt, in welcher eine Mehrzahl gekrümmter Eitragerücksprünge (24, 26) ausgebildet ist, welche jedes Ei derart halten, daß die Längsachse des Eies einen spitzen Winkel gegenüber der Eitragefläche (22) bildet, wobei das Luftzellenende des Eies weiter von der Eitragefläche entfernt ist als das andere Ende des Eies.

7. Vorrichtung nach Anspruch 6, bei welcher die Eitragerücksprünge (24, 26) eine Einrichtung umfassen, welche jedes Ei derart hält, daß die Längsachse des Eies einen Winkel von mindestens 20^{o} gegenüber der Eitragefläche (22) bildet.

8. Vorrichtung nach Anspruch 7, bei welcher die Eitragerücksprünge (24, 26) eine Einrichtung umfassen, welche jedes Ei derart hält, daß die Längsachse des Eies einen Winkel von ungefähr 35^{o} gegenüber der Eitragefläche bildet.

9. Vorrichtung nach Anspruch 6, die zusätzlich eine Einrichtung enthält, welche verhindert, daß die Eier einander berühren.

10. Vorrichtung nach Anspruch 6, die zusätzlich eine Einrichtung enthält, welche die Eitragefläche verkippt.

11. Tablett zum Halten von Eiern während des Brütens und Schlüpfens, gekennzeichnet durch
(a) einen Boden (12), der eine im wesentliche planare Fläche (22) zum Tragen von Eiern aufweist; und
(b) eine Mehrzahl gekrümmter Eitragerücksprünge (24, 26), die in dem Boden ausgebildet sind und von denen jeder so konstruiert ist, daß er ein Ei so hält, daß die Längsachse des Eies einen spitzen Winkel gegenüber der Bodenfläche (22) bildet, wobei das Luftzellenende des Eies von der Bodenfläche weiter entfernt als das andere Ende ist.

12. Tablett nach Anspruch 11, welches eine Seitenwand enthält, welche eine nach oben gerichtete Innenschulter aufweist, die den Boden eines weiteren derartigen Tabletts in verschachtelter Weise trägt.

13. Tablett nach Anspruch 12, bei welchem die Seitenwand Belüftungen oberhalb der Schulter enthält, welche eine Luftströmung direkt über den Eiern, die von den gekrümmten Flächen gehalten sind, zulassen.

14. Tablett nach Anspruch 12, bei welchem die Schulter so konstruiert und angeordnet ist, daß sie zwischen der oberen Fläche eines Eies, welches in einem ersten Tablett aufgenommen ist, und der unteren Fläche des Bodens eines zweiten Tabletts, welches auf dem ersten Tablett gestapelt und mit diesem verschachtelt ist, einen Abstand erzeugt.

15. Tablett nach Anspruch 14, welches außerdem eine Einrichtung enthält, welches ein erstes Eitablett in eine gestapelte und verschachtelte Beziehung zu einem zweiten derartigen Tablett führt, wenn das erste Tablett auf das zweite Tablett abgesenkt wird.

16. Tablett nach Anspruch 11, welches eine Seitenwand enthält, welche eine nach unten gerichtete Außenschulter aufweist, welche an einer Halterung in einem Tablettgestell anliegt.

## Revendications

1. Procédé pour incuber et faire éclore des oeufs, comprenant les étapes consistant à :
(a) placer une pluralité d'oeufs sur un plateau horizontal de support d'oeufs (10) comportant une surface de support (22) qui présente une pluralité d'évidements incurvés de support d'oeuf (24, 26) formés dans celle-ci,
(b) positionner chaque oeuf de façon que l'axe longitudinal de l'oeuf forme un angle aigu par rapport au plateau de support d'oeufs, le bout à poche d'air de l'oeuf étant plus haut que l'autre bout,
(c) immobiliser chaque oeuf par rapport à la surface de support d'oeufs dans l'un desdits évidements incurvés, et
(d) incuber les oeufs jusqu'à ce qu'ils éclosent.

2. Procédé selon la revendication 1, dans lequel l'étape de positionnement de chaque oeuf comprend l'étape consistant à positionner chaque oeuf de façon que l'axe longitudinal de l'oeuf forme un angle d'au moins 20 degrés par rapport à la surface de support d'oeufs.

3. Procédé selon la revendication 2, dans lequel l'étape de positionnement de chaque oeuf comprend l'étape consistant à positionner chaque oeuf de façon que l'axe longitudinal de l'oeuf forme un angle d'approximativement 35 degrés par rapport à la surface de support d'oeufs.

4. Procédé selon la revendication 1, dans lequel ledit procédé comprend en outre l'étape consistant à empêcher les oeufs de se toucher les uns les autres.

5. Procédé selon la revendication 1, dans lequel ledit procédé comprend en outre l'étape consistant à incliner la surface de support d'oeufs pendant l'étape d'incubation des oeufs.

6. Dispositif servant à incuber et faire éclore des oeufs, comprenant des moyens permettant de supporter une pluralité d'oeufs sur un plateau de support d'oeufs (10) sensiblement plan, caractérisé en ce que le plateau comporte une surface de support d'oeufs (22) sensiblement plane avec une pluralité d'évidements incurvés de support d'oeuf (24, 26) formés dans celle-ci, afin de maintenir chaque oeuf de façon que l'axe longitudinal de l'oeuf forme un angle aigu par rapport à la surface de support d'oeufs (22), le bout à poche d'air de l'oeuf étant plus distant de la surface de support d'oeufs que l'autre bout de l'oeuf.

7. Dispositif selon la revendication 6, dans lequel les évidements de support d'oeuf (24, 26) comprennent des moyens destinés à maintenir chaque oeuf de façon que l'axe longitudinal de l'oeuf forme un angle d'au moins 20 degrés par rapport à la surface de support d'oeufs (22).

8. Dispositif selon la revendication 7, dans lequel les évidements incurvés de support d'oeuf (24, 26) comprennent des moyens destinés à maintenir chaque oeuf de façon que l'axe longitudinal de l'oeuf forme un angle d'approximativement 35 degrés par rapport à la surface de support d'oeufs.

9. Dispositif selon la revendication 6, dans lequel ledit dispositif comprend en outre des moyens destinés à empêcher les oeufs de se toucher les uns les autres.

10. Dispositif selon la revendication 6, dans lequel ledit dispositif comprend en outre des moyens permettant d'incliner la surface de support d'oeufs.

11. Plateau destiné à maintenir des oeufs pendant l'incubation et l'éclosion, caractérisé par :
(a) un fond (12) comportant une surface sensiblement plane (22) destinée à supporter les oeufs, et
(b) une pluralité d'évidements incurvés de support d'oeuf (24, 26) formés dans le fond, dont chacun est construit de manière à maintenir un oeuf de façon que l'axe longitudinal de l'oeuf forme un angle aigu par rapport à la surface (22) du fond, le bout à poche d'air de l'oeuf étant plus distant de la surface du fond que l'autre bout.

12. Plateau selon la revendication 11, dans lequel ledit plateau comprend une paroi latérale comportant un épaulement intérieur orienté vers le haut destiné à supporter le fond d'un autre plateau identique en emboîtement.

13. Plateau selon la revendication 12, dans lequel ladite paroi latérale comprend des orifices de ventilation au-dessus dudit épaulement, afin de permettre un écoulement d'air juste au-dessus des oeufs maintenus par lesdites surfaces incurvées.

14. Plateau selon la revendication 12, dans lequel ledit épaulement est construit et agencé de façon à espacer la surface supérieure d'un oeuf logé dans un premier plateau de la surface inférieure du fond d'un second plateau empilé sur ledit premier plateau et emboîté dans celui-ci.

15. Plateau selon la revendication 14, dans lequel ledit plateau à oeufs comprend en outre des moyens destinés à guider un premier tel plateau à oeufs jusqu'en relation empilée et emboîtée avec un second tel plateau lorsque ledit premier plateau est descendu sur ledit second plateau.

16. Plateau selon la revendication 11, dans lequel ledit plateau comprend une paroi latérale comportant un épaulement extérieur orienté vers le bas destiné à venir en contact avec un support d'un râtelier à plateaux.
